Europäisches Patentamt

European Patent Office

Office européen des brevets

(11) Numéro de publication: **0 253 732**
**A1**

(12) **DEMANDE DE BREVET EUROPEEN**

(21) Numéro de dépôt: **87401661.1**

(22) Date de dépôt: **15.07.87**

(51) Int. Cl.4: **H 05 B 41/392**
**H 05 B 41/29**

(30) Priorité: **15.07.86 FR 8610248**

(43) Date de publication de la demande:
**20.01.88 Bulletin 88/03**

(84) Etats contractants désignés:
**BE CH DE GB IT LI**

(71) Demandeur: **SEFLI-SOCIETE D'EQUIPEMENT ET DE FABRICATION POUR LA LUMINESCENCE ET L'INCANDESCENCE**
**Avenue de la Paix**
**F-91420 Morangis Cédex (FR)**

**Kneider, François**
**1, Chemin des Espartes**
**F-06800 Cagnes (FR)**

(72) Inventeur: **Kneider, François**
**1, Chemin des Espartes**
**F-06800 Cagnes (FR)**

(74) Mandataire: **Fort, Jacques**
**CABINET PLASSERAUD 84, rue d'Amsterdam**
**F-75009 Paris (FR)**

(54) **Dispositif d'alimentation de lampes à décharge.**

(57) Dispositif d'alimentation de lampes, lampes à décharge, tubes à décharge, etc..., de type halogène, halogène à iodure métallique, vapeur de sodium, vapeur de mercure, ultra-violets, néon, etc... comprenant :

1- un élément de branchement sur le réseau alternatif (101) qui est indifférent à la fréquence du réseau.

2- un générateur (102) auto-oscillant de tension sinusoidale de puissance, à des fréquences beaucoup plus élevées que celles du réseau, de l'ordre de 10 à 100 KHz fonctionannt en classe C ou B.

3- un circuit régulateur de courant (103) de la lampe ou du tube.

4- un circuit d'amorçage (104) des lampes ou tubes à décharge dans les cas nécessaires.

EP 0 253 732 A1

**Description**

La présente invention a pour objet un dispositif d'alimentation de lampes, lampes à décharge, tubes à décharge, etc... de type halogène, halogène à iodure métallique, vapeur de sodium, vapeur de mercure, ultraviolets, néon, etc...

Le principe de fonctionnement de ces types de lampes ou tubes est déjà connu à ce jour et ne nécessite pas de description particulière.

Néanmoins, ces lampes ou tubes ne peuvent pas être branchés directement sur le réseau de l'installation électrique, ils sont obligatoirement branchés, soit en série avc une impédance régulatrice de courant (généralement selfique), soit avec un transformateur réducteur ou élévateur de voltage avec ou sans isolation galvanique, soit avec une combinaison de ces deux éléments.

Les dispositifs connus à ce jour présentent l'inconvénient d'être lours, encombrants, et de consommer plus d'énergie que le dispositif objet de l'invention.

Le dispositif objet de l'invention permet de pallier ces inconvénients ; de plus, il atténue substantiellement l'effet stroboscopique en ce qui concerne les lampes et tubes à décharges, d'où un confort d'utilisation et une économie d'énergie accrus. Ce dispositif est conforme à la revendication 1.

L'invention sera mieux comprise à la lecture de la description qui suit de modes particuliers de réalisation, donnés à titre d'exemples non limitatifs. La description se réfère aux dessins qui s'accompagnent, dans lesquels :

- la figure 1 est un schéma général montrant les différents éléments d'un dispositif selon l'invention ;

- la figure 2 est un schéma électrique de l'élément ou circuit de branchement appartenant au dispositif de la fig. 1 ;

- la figure 3 est un premier montage possible du générateur oscillant de la fig. 1 ;

- la figure 4 donne une variante préférée du même générateur de la fig. 1 utilisant un amplificateur symétrique dit Push-Pull ;

- la figure 4a donne la configuration du courant dans le dispositif ;

- la figure 5 est un schéma électrique d'un mode de réalisation du circuit régulation de courant de la charge (lampe, tube ...) avec un circuit d'amorçage

- la figure 6 est une variante simplifiée de la fig. 5;

- la figure 7 est une autre variante simplifiée de la fig. 5.

La composition de chacun des circuits ou éléments du dispositif de l'invention est décrite dans le détail ci-après.

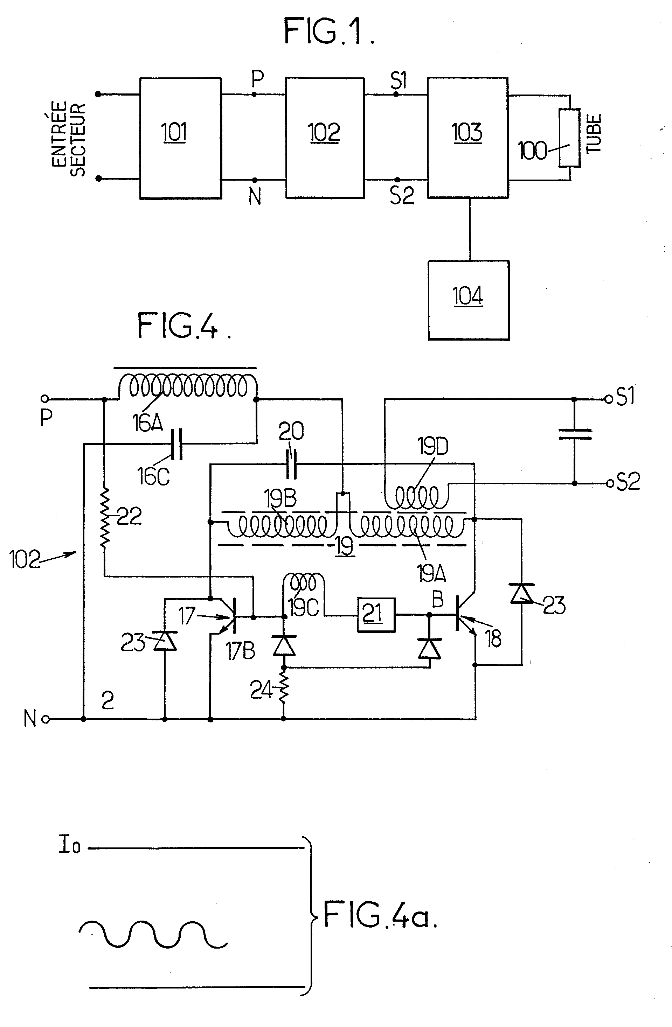

La figure 1 montre un dispositif d'alimentation d'un tube 100 selon l'invention qui comprend :
- un élément de branchement sur le réseau alternatif 101 qui est indifférent à la fréquence du réseau ;
- un générateur 102 auto-oscillant de tension sinusoïdale de puissance, à des fréquences plus élevées que celles du réseau, de l'ordre de 10 à 100 KHz fonctionnant en classe C ou B et branché aux bornes P et N de sortie de l'élément 101 ;
- un circuit régulateur de courant 103 de la lampe ou du tube, branché aux bornes S1 et S2 de sortie de l'élément 102, et
- un circuit d'amorçage 104 des lampes ou tubes à décharge dans les cas nécessitant une tension élevée de l'ordre de 2 500 à 4 000 V.

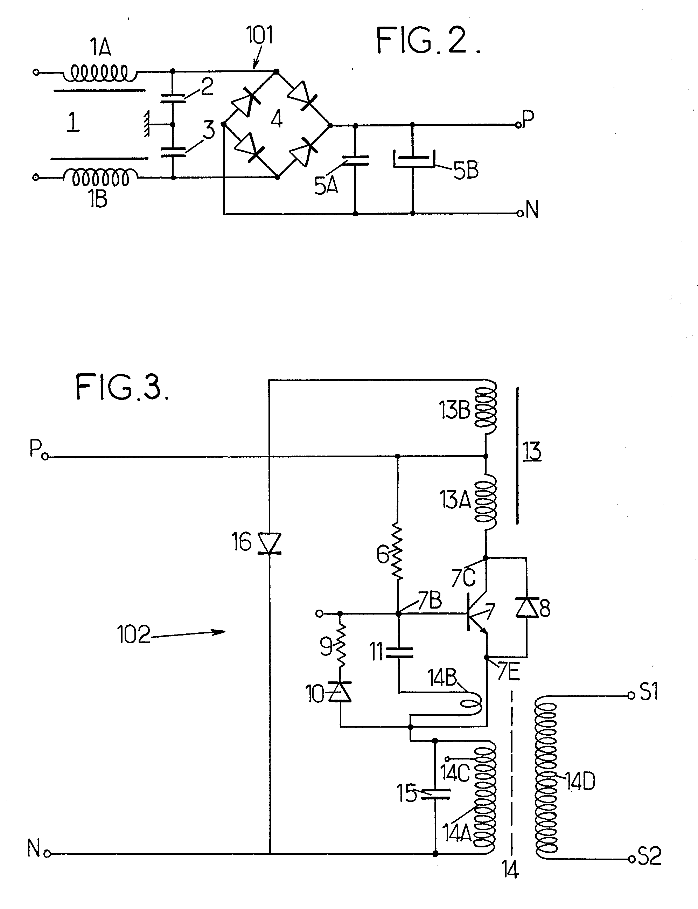

Le circuit de branchement 101 sur le réseau alternatif, habituellement à 50 Hz ou 60 Hz (voir fig. 2) comprend :
- un circuit limiteur de courant de pointe 1 qui est selfique et qui permet de plus le découplage parasitaire du circuit vis-à-vis du réseau. Ce circuit comprend au moins une self série 1A, 1B, avec un entrefer limiteur de courant de saturation approprié (fig. 2).

Le découplage parasitaire du circuit vis-à-vis du réseau est réalisé avec les capacités 2 et 3 en combinaison avec les selfs séries 1A et 1B
- un pont redresseur 4
- un condensateur de filtrage (ou lissage) 5A et/ou 5B qui permet d'obtenir une tension continue filtrée entre les points P et N.

Cet élément de branchement sur le réseau alternatif est caractérisé par le fait qu'il présente une impédance selfique d'entrée relativement élevée atténuant ainsi l'incidence de la capacité 5A, 5B qui est généralement de forte valeur. Il permet ainsi l'absorption d'un courant de pointe moins élevé et d'une durée plus longue sur le réseau ; de ce fait, il peut être commandé plus facilement par des triacs en commutation ou graduation.

Dans un mode de réalisation particulièrement avantageux, les deux selfs avec entrefer 1A et 1B sont de polarité inverse ce qui permet d'ajouter l'impédance de l'une à celle de l'autre.

Une des réalisations possibles du générateur de tension sinusoidale est présentée en Fig. 3.

Cette réalisation en mono-alternance comprend:
- au moins un transformateur 14, ayant au moins deux bobinages 14A et 14B (14C etc.).
- au moins une capacité de résonance 15, en parallèle sur le bobinage 14A entre autres.
- un transistor de commutation 7.
- une self anti-résonance 13.
- une résistance 6, connectée entre le point P et le point 7B, qui a pour objet de créer un courant de fuite entre les points 7C et 7E du transistor 7.
- une diode 8.
- une résistance 9.
- une diode 10, en série avec la résistance 9.
- une capacité 11, en série avec le bobinage 14B, de façon telle que l'ensemble capacité 11 et bobinage 14B soit en parallèle avec les points 7E et 7B.
- une diode 16.

Le transformateur 14, le transistor 7 et la self 13 sont les trois éléments indispensables; ils sont montés en série, dans un ordre quelconque, de façon telle que l'ensemble soit en parallèle avec les points P et N.

Le courant créé par la résistance 6 engendre un phénomène de résonance connu entre le bobinage 14A et la capacité 15. Le courant ainsi engendré est prélevé par le bobinage de réaction 14B et amplifié par le transistor 7, créant ainsi des oscillations entretenues. Lors de la mise sous tension, le générateur oscille tout d'abord en classe A, puis il passe rapidement en classe B, pour atteindre son régime de fonctionnement en classe C, le tout en quelques fractions de secondes.

Le bobinage 14B a pour objet de créer la réaction et de maintenir l'oscillation.

La capcité 11 a pour objet, d'une part de présenter une impédance de série entre le point 7B, le bobinage 14B et le point 7E, d'autre part, de créer une polarisation négative de 7B par rapport à 7E.

La valeur de cette tension négative est inversement proportionnelle à la phase active de la conduction du transistor 7, d'où un transfert d'énergie.

La conduction du transistor 7 dépend de la polarité negative du point 7B par rapport à 7E.

Plus celle-ci est négative, plus la conduction est faible et vice versa.

Il suffit d'appliquer une tension plus ou moins négative à ce point 7B pour déterminer la puissance générée.

La résistance 9 a pour objet d'évacuer ces charges négatives vers le point 7E. La présence de la diode 10 a pour objet de neutraliser l'incidence de la résistance 9 sur la résistance 6.

En l'absence d'une charge substantielle (ce qui est courant en utlisation normale des lampes ou tubes précités), il se produit une inversion de polarité aux deux extrémités 7E et 7C du transistor 7; cette tension, si elle est suffisamment importante, entrainerait la destruction du transistor 7; la diode 8 a donc pour rôle d'empêcher l'inversion de polarité, l'énergie ainsi disponible se trouvant réinjectée dans le circuit entre P et N.

La self 13 a pour effet de rendre l'incidence de la capacité 15 négligeable et de faciliter la saturation du transistor 7 lors de sa conduction. Par contre, lors du blocage du transistor 7, la self 13 présente l'inconvénient majeur de générer dans de nombreux cas d'utilisations des tensions élevées susceptibles de détruire le transistor 7. Pour éviter ce problème, on peut utiliser différents moyens connus à ce jour afin de diminuer le coefficient Q de la self 13, ce qui entraîne inmanquablement une perte d'énergie non négligeable.

L'un des objectifs de l'invention est de récupérer cette énergie. Pour cela, on a créé un bobinage 13B sur la self 13, d'une polarité appropriée; ce bobinage 13B est branché en parallèle avec les points P et N et en série avec la diode 16. La combinaison bobinage 13B et diode 16 récupère la surtension ainsi générée.

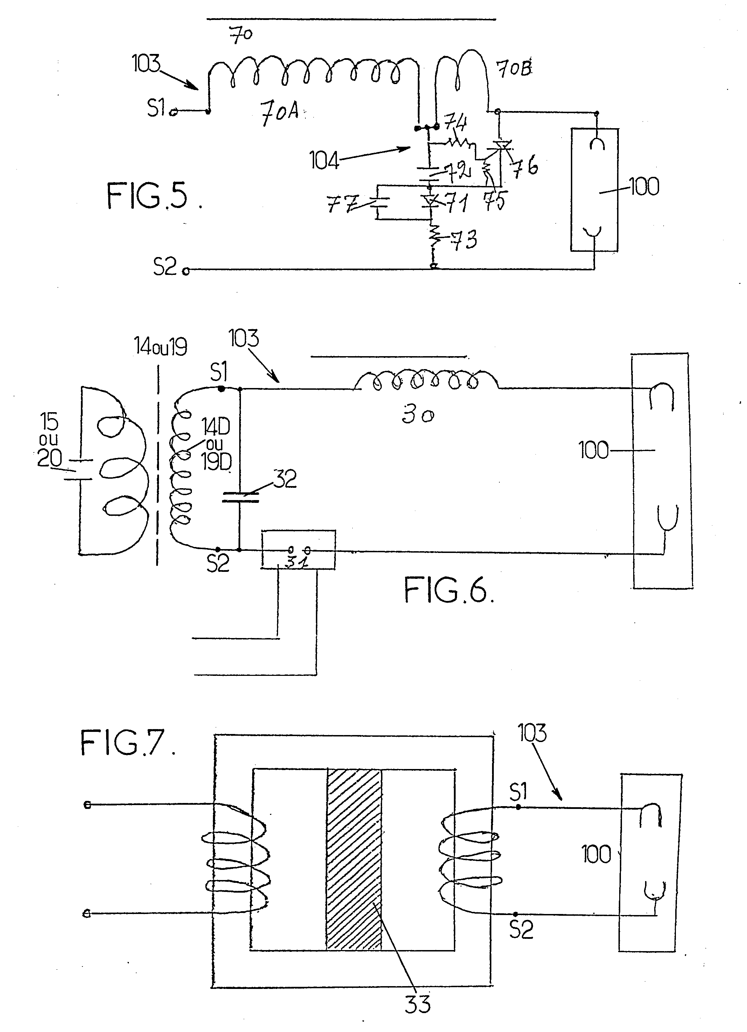

La figure 4 présente une variante du générateur de tension sinusoidale, mais en double alternance parallèle fonctionnant en classe B, c'est-à-dire de façon telle que le courant ne soit jamais interrompu dans le système (voir Fig.4a). En réalité, le courant circulant dans le circuit oscillant n'est jamais interrompu, la variation de la charge se répercutant en une variation du courant continu avec une légère composante alternative.

On utilise alors deux transistors en push-pull parallèle sans pour autant sortir du cadre de l'invention. Le dispositif ainsi présenté comprend:
- au moins deux transistors 17-18
- un transformateur 19
- au moins trois bobinages 19A, 19B, 19C et si nécessaire un quatrième bobinage 19 D (ou plus) pour le branchement de la charge, si l'isolation galvanique est désirée.
- au moins une capacité 20 en parallèle sur au moins un des bobinages pour la résonance.
- une résistance 22
- une diode 23
- une résistance 24
- une impédance 21 qui est parfois nécessaire pour limiter le courant dans le circuit. En effet, au delà d'une tension limité, inhérente au type de transistor utilisé, un effet Zener se produit et entraîne un courant très élevé entre les points 18B et 17B.

L'impédance 21 peut être de nature ohmique, capacitive, selfique, ou une combinaison des deux, ou encore des trois.

Le principe de fonctionnement de ce dispositif ne change pas beaucoup par rapport à la description précédente.

Les deux transistors 17-18 conduisent alternativement, c'est-à-dire que l'augmentation du courant dans l'un entraîne obligatoirement la diminution dans l'autre, et vise et versa.

On peut utliser d'autres cas de figure, push-pull série, mono-alternance série, etc..., sans pour autant sortir du cadre de l'invention.

Les transistors définis de type NPN bi-polaires, peuvent être de type PNP, MOS, GOT, etc..., sans pour cela sortir du cadre de l'invention, il suffit pour cela d'appliquer les polarisations adéquates, ce qui est à la portée de l'homme de l'art.

Le circuit régulateur de courant de la lampe ou du tube est montré en figure 6.

Les tensions générées aux bornes de l'enroulement 14A du transformateur 14 (Fig. 3) ou de l'enroulement 19b du transformateur 19 (Fig.4) ne peuvent être utilisés directement pour alimenter la lampe ou le tube.

Aussi le dispositif objet de l'invention prévoit une impédance série entre la source de l'alimentation et la charge en question, afin d'une part, de réguler le courant, d'autre part, de découpler le système oscillant de la charge et de sa variation.

L'impédance série la plus appropriée consiste en une impédance selfique (voir Fig. 5).

Cette impédance selfique 30 comprend au moins un bobinage (bobiné sur un corps ferromagnétique, exemple ferrite), mis en série entre la charge et la source d'alimentation. De ce fait, si la charge diminue de résistance pour une cause quelconque, cette diminution a peu d'incidence sur la valeur de la tension générée aux bornes du transformateur définit ci-dessus, et le système continue à fonctionner à la perfection.

Ce système permet une régulation active par le fait que toute diminution de la résistance de la charge entraîne une diminution de la self induction du transformateur 14 (figure 3) qui elle-même entraîne une augmentation de fréquence du générateur, d'où l'augmentation de l'impédance de la self 30 et la régulation du courant. Par ce fait, on obtient un courant presque constant malgré une variation importante de la résistance ou impédancede la charge.

Dans un mode de réalisation préféré un condensateur 32 est placé en parallèle de la charge. Ceci permet, d'une part, une correction du facteur de puissance entre tension à vide et tension en charge ce qui est utile dès que cette dernière varie d'un facteur supérieur à 1,5 par rapport à la tension à vide et, d'autre part, une meilleure protection des transistors du générateur auto-oscillant.

Si l'on désire une règulation plus poussée, il suffit d'insérer un élément sensible 31 en série entre la source du courant et la charge, transformant une partie du courant en tension, résistance, courant électrique, etc... Cet élément sensible 31 peut être une photo-diode, une photo-résistance, un photo-transistor ou un transformateur de courant, etc...

La self 30 peut être matérialisée par un enroulement de fil autour d'un corps magnétique de type ferrite ou similaire d'une forme quelconque, ou tout simplement matérialisée par une fuite magnétique entre primaire et secondaire (Voir Figure 7 partie hachurée 33).

L'utilisation d'une fuite magnétique permet d'économiser l'un des deux bobinages, celui du secondaire ou de la self série. En effet, l'un des deux bobinages (voir figure 7) suffit pour faire le double emploi.

Dans le cas où la lampe (ou tube) à décharge nécessite une tension élevée, de l'ordre de 2500 à 4000 volts et même plus (voir notice des constructeurs), ce qui est généralement le cas pour les lampes halogènes à iodure métallique, sodium haute pression, ultra-violets, etc..., il est indispensable d'avoir un amorceur que l'on peut le cas échéant adjoindre ou incorporer à l'alimentation.

La Fig. 5 montre un dispositif d'amorçage possible dans le cadre de l'invention.

Ce dispositif comprend :
- Une self 70 régulatrice de courant (qui peut être la même que celle définie sur les figures 5 ou 6), ayant au moins deux enroulements 70A et 70B; l'enroulement 70A sert à réguler le courant de la lampe et en l'absence de courant à élever la tension jusqu'aux quelques milliers de volts requis; l'enroulement 70B sert à générer une tension de l'ordre de 100 à 250 volts, qui se trouve élevée par le rapport de transformation entre 70A et 70B.
- une diode 71 qui sert à redresser la tension aux bornes de la lampe (ou tube) en l'absence de courant.
- un condensateur 72 qui emmagasine cette tension (redressée par la diode 71)
- une résistance 73, qui sert à limiter ce courant et à découpler les impulsions d'amorçage.
- deux résistances 74 et 75 qui servent de diviseur de tension.
- un thyristor 76.
- une capacité 77.

Le condensateur 72 va donc être chargé progressivement par la diode 71 et la résistance 73, atteignant une valeur critique, déclenchant un courant anode - cathode du thyristor 76.

A une tension déterminée (de l'ordre de 100 à 250V), le thyristor se met à conduire et décharger le condensateur 72 à travers l'enroulement 70b.

Le seuil de déclenchement du thyristor 76 est déterminé par son courant de gachette et par les valeurs des résistances 74, 75, et 73.

La capacité 77 n'a pour rôle que de protéger la diode 71 d'une tension inverse générée. Cette capacité peut être inutile si l'on choisit une diode 71 ayant une tension inverse de l'ordre de 4000 Volts ou plus. Mais ce type de diode est plus coûteux que la capacité.

Ce système d'amorçage est conçu pour fonctionner en l'absence d'un courant dans la lampe, d'où une tension maximum.

Dès l'établissement d'un courant dans la lampe et en fonctionnement normal, la tension se trouve être environ de moitié inférieure à la tension maximum.

Le choix des résistances 74, 75 et 73 est tel que le système fonctionne d'une façon satisfaisante à une tension de l'ordre de 70 à 100% de la tension maximale (tension en l'absence de courant); le système se trouve interrompu en fonctionnement normal de la lampe.

Le thyristor 76 peut être remplacé par tout autre élément se mettant en court-circuit à une tension prédéterminée, de type SIDAC, TRISIL etc...

Un autre système d'amorçage peut être également appliqué, sans pour autant sortir du cadre de l'invention.

Ce dispositif peut trouver un grand champ d'applications dans l'éclairage, l'industrie, le domaine médical, etc... Il peut se substituer d'une façon avantageuse aux systèmes existants à un coût de production égal et même inférieur.

Compte tenu de son faible poids (de l'ordre de 1/10 de celui d'un système classique) et de la diminution de la dissipation thermique, il peut donner un élan nouveau à l'éclairage des lampes et tubes cités ci-dessus; en effet, pour les petites puissances, il permet de créer des luminaires légers, des lames d'éclairage dans lequel le dispositif d'alimentation est incorporé au culot de la lampe; pour les grandes puissances, il permet d'incorporer l'alimentation au luminaire, évitant ainsi une installation généralement coûteuse entre le foyer lumineux et le transformateur, ballaste, ou autre.

**Revendications**

1. Dispositif d'alimentation pour lampe à décharge (100) comprenant:
un circuit (101) de branchement sur le réseau alternatif comportant des moyens à self inductance (1) de limitation de courant et un redresseur (4) du courant alternatif en courant continu,
un générateur auto-oscillant (102) de tension alternative de puissance comportant, en parallèle entre les bornes de sortie du redresseur (4), au moins un transistor de commutation (7,17,18) dont la jonction collecteur-émetteur est en série, d'une part, avec une self (13A16A) et, d'autre part, avec le primaire (14A, 19A, 19B) d'un transformateur (14,19), un premier secondaire (14B, 19C) dudit transformateur étant relié à la base dudit transistor,
et un circuit régulateur (103) de courant de la lampe (100) comportant une self de régulation (30,70) en série avec la lampe et appartenant également à un circuit d'amorçage (104), caractérisé en ce que
toutes les selfs (13A, 16A, 30, 70) et le transformateur (14,19) du générateur auto-oscillant (102), du circuit régulateur (103), et du circuit d'amorçage (104) sont à circuit ferromagnétique comportant un noyau du type ferrite, avec entrefer,
le transistor de commutation (7,17) a sa base reliée à l'une des bornes de sortie du redresseur par l'intermédiaire d'une résistance et relié à son émetteur par l'intermédiaire d'une résistance en série avec une diode,
et en ce que
la self de régulation (30,70) est distincte de la self (13A,16A) du générateur auto-oscillant et en série d'part avec la lampe (100) et d'autre part avec un second circuit secondaire (14D,19D) du transformateur (14, 19), de sorte que le circuit régulateur (103) est séparé du générateur auto-oscillant (102) par ledit transformateur (14,19).

2. Dispositif d'alimentation pour lampe à décharge selon la revendication 1, caractérisé en ce que les moyens à self inductance (1) de limitation de courant du circuit de branchement sur le réseau alternatif (101) sont constitués par deux selfs à polarité inverse (1A,1B) respectivement raccordés aux deux bornes de branchement sur le réseau alternatif de façon à assurer le découplage en parasites du circuit vis-à-vis du réseau.

3. Dispositif d'alimentation pour lampe à décharge selon l'une quelconque des revendications 1 et 2, caractérisé en ce qu'il comporte deux transistors de commutation (17,18) dont les bases sont reliées l'une à l'autre par l'intermédiaire du premier secondaire (19c) du transformateur (19) et dont les collecteurs sont couplés l'un à l'autre par un condensateur (20) et sont reliés en parallèle dudit condensateur (20), symétriquement et respectivement aus bornes primaires du transformateur (19) à point milieu, ledit point milieu étant relié à la self (16A) du générateur auto-oscillant (402).

4. Dispositif d'alimentation pour lampe selon l'une quelconque des revendications 1 et 2, caractérisé en ce que le générateur auto-oscillant (102) comporte de plus un système de récupération de surtension branché en parallèle aux bornes d'entrée du courant continu dans ledit générateur, ledit système comprenant une self (13B) en série avec une diode (16).

5. Dispositif d'alimentation pour lampe selon l'une quelconque des revendications précédentes, caractérisé en ce que le circuit régulateur (103) de courant de la lampe comporte de plus un condensateur de protection (3) branché en parallèle avec la charge.

6. Dispositif d'alimentation pour lampe selon l'une quelconque des revendications précédentes, caractérisé en ce que le circuit d'amorçage (104) comporte la self de régulation (30,70) branchée en série avec un condensateur (72) lui-même branché en parallèle avec la lampe (100).

FIG.1.

FIG.4.

FIG.4a.

0253732

0253732

FIG.2.

FIG.3.

0253732

FIG.5.

FIG.6.

FIG.7.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 572 988 (HANDLER)<br><br>* Colonne 4, ligne 19 - colonne 10, ligne 63 * | 1,3,5, 6 | H 05 B 41/392<br>H 05 B 41/29 |
| Y |  | 2,4 | |
|  | --- | | |
| Y | EP-A-0 198 632 (LEE)<br>* Résumé; figures * | 2 | |
|  | --- | | |
| Y | US-A-4 329 627 (HOLMES)<br>* Colonne 7, lignes 33-34 * | 4 | |
|  | --- | | |
| A | US-A-3 700 956 (CLUETT) | 1 | |
|  | ----- | | |

DOMAINES TECHNIQUES RECHERCHES (Int. Cl.4)

H 05 B 41/00

Le présent rapport de recherche a été établi pour toutes les revendications

| Lieu de la recherche | Date d'achèvement de la recherche | Examinateur |
|---|---|---|
| LA HAYE | 23-09-1987 | BERTIN M.H.J. |